## Europäisches Patentamt
## European Patent Office
## Office européen des brevets

(19)

(11) Veröffentlichungsnummer: **0 036 489**
**B1**

(12)

# EUROPÄISCHE PATENTSCHRIFT

(45) Veröffentlichungstag der Patentschrift:
13.04.83

(51) Int. Cl.³: **A 01 N 43/40**

(21) Anmeldenummer: 81101162.6

(22) Anmeldetag: 19.02.81

(54) Verfahren zur Regulierung des Wachstums von Pflanzen.

(30) Priorität: 27.02.80 DE 3007224

(43) Veröffentlichungstag der Anmeldung:
30.09.81 Patentblatt 81/39

(45) Bekanntmachung des Hinweises auf die Patenterteilung:
13.04.83 Patentblatt 83/15

(84) Benannte Vertragsstaaten:
AT BE CH DE FR GB IT LI NL SE

(56) Entgegenhaltungen:
DE-A-2 704 962
DE-A-2 755 940
DE-A-2 815 345
DE-A-2 815 505
FR-A-2 342 966

(73) Patentinhaber: BASF Aktiengesellschaft,
Carl-Bosch-Strasse 38, D-6700 Ludwigshafen (DE)

(72) Erfinder: Schott, Eberhard Peter, Oelbergstrasse 27,
D-6730 Neustadt (DE)
Erfinder: Rittig, Falk, Dr., Am Bergel 7,
D-6718 Gruenstadt (DE)
Erfinder: Fischer, Volker, Dr., Alte Steige 3,
D-6981 Wessental (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Regulierung des Wachstums von Pflanzen

Die vorliegende Erfindung betrifft die Verwendung von N,N-Dimethlypiperidiniumsalzen zur Regulierung des Pflanzenwachstums.

Es ist bekannt, N,N-Dimethylpiperidiniumsalze in Aufwandmengen von 0,5 bis 0,8 kg/ha zur Reduzierung des Längenwachstums von Pflanzen zu verwenden (DE-OS 2 207 575).

Es ist ferner bekannt, N,N-Dimethylpiperidiniumsalze in einer Menge von 5 bis 24,5 g Wirkstoff je ha zur Behandlung von Baumwollpflanzen zwecks Reduzierung des Längenwachstums zu verwenden (DE-OS 2 815 345).

Eine positive Wirkung wird beobachtet bei Versuchen mit Tomaten und Kartoffeln und eine schwankende Wirkung bei Getreide, Gräsern, Raps, Sojabohnen und Zuckerrohr. Es ist außerdem bekannt, daß N,N-Dimethylpiperidiniumchlorid bei Aufwandmengen von 25 bis 100 g Wirkstoff je ha bei Baumwolle eine gute Wirkung zeigt (Merkblatt der BASF Wyandotte Corporation, USA, vom Mai 1978).

Es ist ferner bekannt, N,N-Dimethylpiperidiniumchlorid in Aufwandmengen von 460 g je ha bei Getreide (DE-OS 2 755 940) oder in Aufwandmengen von 50 bis 500 g je ha bei Getreide oder Baumwolle (DE-OS 2 704 962) zu verwenden.

Es wurde nun gefunden, daß durch die Behandlung von Pflanzen außer Baumwollpflanzen oder Getreidepflanzen mit einem N,N-Dimethylpiperidiniumsalz in einer Menge von weniger als 500 g Wirkstoff je ha keine Reduzierung des Längenwachstums sondern eine des Pflanzenwachstum fördernde Wirkung eintritt. N,N-Dimethylpiperidiniumsalze können in diesem Falle zur Gruppe der Bioregulatoren gezählt werden, welche in die biologischen Entwicklungsprozesse qualitativ und quantitativ eingreifen.

Beispielsweise werden folgende Wirkungen beobachtet.

- Erhöhung der Produktion von Trockensubstanz vegetativer wie auch generativer Pflanzenteile;
- Veränderung des Gewichtsverhältnisses vegetativer : generativer Organmasse zu Gunsten der generativen Organmasse;
- Vergrößerung der Assimilationsfläche;
- Erhöhte Produktion pflanzlicher Inhaltsstoffe, z. B. Stärke, lösliche Aminosäuren, Terpenoide, ätherische Öle, Latex, Alkaloide.
- Reduzierung des Gehalts an unerwünschten Inhaltsstoffen, z. B. Aflatoxin, Gossypol, Limonin;
- Veränderung der Ionenkonzentration im Pflanzengewebe und damit der Resistenz gegenüber Umwelteinflüssen;
- Erzeugung samenloser Früchte ohne Befruchtung;
- Verstärkung der Pigmentbildung;
- Verbesserung der inneren und äußeren Fruchtqualität;
- Verkürzung des Entwicklungszyklus, Vorverlegung der Erntereife

Salze sind beispielsweise Salze der Halogenwasserstoffsäuren z. B. das Chlorid, oder Salze der Schwefelsäure, Essigsäure oder Phosphorsäure. Das Chlorid wird bevorzugt.

Besonders gute Wirksamkeit wird beobachtet beispielsweise bei Knollenfrüchten, Fruchtgemüse, Samenfrüchten, Hülsenfrüchten, Blattgemüse, Ölpflanzen, Gurkengewächsen und Citrusfrüchten.

Vorzugsweise werden Aufwandmengen von 1 bis 450 g/ha, insbesondere 10 bis 200 g/ha angewendet.

Als Beispiele der biologischen Wirksamkeit können nachstehende Ergebnisse aus Freilandversuchen angeführt werden. Diese Versuche wurden mit 4-facher Wiederholung bei Parzellengrößen von 25 bis 50 m$^2$ durchgeführt. Alle Behandlungen der Pflanzen erfolgten durch Spritzung einer wäßrigen Lösung des Wirkstoffs auf die grünen Pflanzenteile.


### I. Knollenfrüchte, z. B. Kartoffeln, Süßkartoffeln


### Beispiele 1 bis 4

In Versuchen mit 4 verschiedenen Kartoffelsorten wurden 25 g/ha N,N-Dimethylpiperidiniumchlorid 80 Tage nach der Pflanzung, zum Beginn der Knollenbildung auf das Blatt ausgebracht. Die Resultate zeigen, daß die Behandlung zu einer Vergrößerung der Assimilationsfläche, Erhöhung der Trockensubstanzproduktion von Blatt-, Stengel- und Knollenmasse und letzlich zu einer Erhöhung des Knollenertrages führte. Eine Erhöhung der Produktion von Stärke und Biomasse kann davon abgeleitet werden.

## Beispiel 1

Behandlung: 80 Tage nach der Pflanzung (Beginn der Knollenbildung)

Solanum tuberosum var. Mariva

| | | g/ha N,N-Dimethylpiperidiniumchlorid | |
| --- | --- | --- | --- |
| | | 0 | 25 |
| Wuchshöhe | cm | 73,0 | 83,0 |
| Blattfläche | dm$^2$ | 3,8 | 4,8 |
| Blattgewicht, TM | g | 27,2 | 28,6 |
| Stengelgewicht, TM | g | 42,8 | 45,4 |
| Knollen/Pflanze | Stck | 17,0 | 21,0 |
| Knollen/Pflanze, TM | g | 132,7 | 142,1 |

TM  = Trockenmasse
Stck = Stück

## Beispiel 2

Behandlung: 80 Tage nach der Pflanzung 1978 (Beginn der Knollenbildung)

Solanum tuberosum, var. Revolucion

| | | g/ha N,N-Dimethylpiperidiniumchlorid | |
| --- | --- | --- | --- |
| | | 0 | 25 |
| Wuchshöhe | cm | 51,0 | 67,0 |
| Blattfläche | dm$^2$ | 7,4 | 16,4 |
| Blattgewicht, TM | g | 41,3 | 63,4 |
| Stengelgewicht, TM | g | 31,2 | 53,9 |
| Knollen/Pflanze | Stck | 15,0 | 23,0 |
| Knollen/Pflanze, TM | g | 85,1 | 176,5 |

## Beispiel 3

Behandlung: 80 Tage nach der Pflanzung 1978 (Beginn der Knollenbildung)

Solanum tuberosum, var, Mi Peru

|  |  | g/ha N,N-Dimethylpiperidiniumchlorid | |
|  |  | 0 | 25 |
| --- | --- | --- | --- |
| Wuchshöhe | cm | 63,0 | 60,0 |
| Blattfläche | dm$^2$ | 6,2 | 14,8 |
| Blattgewicht, TM | g | 33,8 | 65,3 |
| Stengelgewicht, TM | g | 41,3 | 54,1 |
| Knollen/Pflanze | Stck | 17,0 | 32,0 |
| Knollen/Pflanze, TM | g | 69,2 | 129,7 |

## Beispiel 4

Behandlung: 80 Tage nach der Pflanzung (Beginn der Knollenbildung)

Solanum tuberosum, var. Ticahuasi

|  |  | g/ha N,N-Dimethylpiperidiniumchlorid | |
|  |  | 0 | 25 |
| --- | --- | --- | --- |
| Wuchshöhe | cm | 62,0 | 57,0 |
| Blattfläche | dm$^2$ | 11,8 | 12,1 |
| Blattgewicht, TM | g | 58,6 | 67,4 |
| Stengelgewicht, TM | g | 52,5 | 61,1 |
| Knollen/Pflanze, TM | g | 103,7 | 144,5 |

## Beispiel 5

Ein weiterer Versuch mit Kartoffeln zeigt, daß die Anwendung von 74 g/ha N,N-Dimethylpiperidiniumchlorid den Knollenertrag je Pflanze und somit je Flächeneinheit erhöht.

## Beispiel 5

| Pflanzung | 09.03.1979 |
| Behandlung | 01.05.1979 (erste Blüten sichtbar) |
| Ernte | 11.06.1979 |

Solanum tuberosum, var. »Lasotared«

|  |  | g/ha N,N-Dimethylpiperidiniumchlorid | |
|  |  | 0 | 74 |
| --- | --- | --- | --- |
| Knollen/Pflanze | Stck | 23,9 | 35,2 |
| Ertrag | dl/ha | 267,7 | 294,8 |

## Beispiel 6

Behandelt man Süßkartoffeln mit beispielsweise 25 bis 448 g/ha N,N-Dimethylpiperidiniumchlorid zum Beginn der Knollenbildung, so wird der Anteil qualitativ erstklassiger Knollen wie auch der Gesamtertrag deutlich erhöht.

## Beispiel 6

Behandlung: Beginn der Knollenbildung

Ipomoea batata, var, Georgia-Red

| | | g/ha N,N-Dimethylpiperidiniumchlorid | | | | | |
| --- | --- | --- | --- | --- | --- | --- | --- |
| | | 0 | 28 | 56 | 112 | 224 | 448 |
| Knollen, 1. Qualität | kg/Pflanze | 0,74 | 0,92 | 0,95 | 0,92 | 0,88 | 0,98 |
| | % | 100 | 124 | 128 | 124 | 118 | 132 |
| Knollen, gesamt | kg/Pflanze | 1,40 | 1,89 | 2,12 | 1,86 | 1,60 | 1,68 |
| | % | 100 | 135 | 151 | 133 | 114 | 120 |

## II. Fruchtgemüse, z. B. Tomaten

## Beispiel 7

Tomaten wurden mit 112 g/ha N,N-Dimethylpiperidiniumchlorid behandelt, als diese 25–30 cm groß waren und in voller Blüte standen. Der Ertrag an verkaufsfähigen Tomaten (Marktware) wurde erhöht. Darüber hinaus konnte die Fruchtqualität verbessert werden. Die bessere Qualität zeigte sich in einer vergrößerten Fleischwandstärke sowie einer verbesserten Pigmenteinlagerung.

## Beispiel 7

Planzung:      07. 02. 78
Behandlung:    23. 03. 78 (25–30 cm Wuchshöhe, 60 % Blüten)
Ernte:         10. 05. 78

Lycospersicon esculentum var. Flora-date

| | | g/ha N,N-Dimethylpiperidiniumchlorid | |
| --- | --- | --- | --- |
| | | 0 | 112 |
| Ertrag Marktware | to/ha | 31,2 | 33,8 |
| Fleischwandstärke | mm | 5,95 | 6,27 |
| Fruchtfarbe | 0–5[+] | 4,8 | 4,9 |
| Fleischfarbe | 0–5[+] | 2,7 | 2,9 |

[+] 0 = grün
5 = rot

## Beispiel 8

Behandlung von Tomaten mit 112–448 g/ha N,N-Dimethylpiperidiniumchlorid bei einer Wuchshöhe von 60–90 cm zu Beginn der Blüte führten zu einer deutlichen Ertragserhöhung.

## Beispiel 8

Pflanzung: 02. 06. 78
Behandlung: 21. 08. 78 (60–90 cm Wuchshöhe, Beginn der Blüte)
Ernte: 02. 10.78

Lycospersicon esculentum, var. C-28

| | | g/ha N,N-Dimethylpiperidiniumchlorid | | | |
|---|---|---|---|---|---|
| | | 0 | 112 | 224 | 448 |
| Ertrag reife Früchte | to/ha | 7,8 | 17,6 | 14,1 | 12,6 |

## Beispiel 9

Anwendung von 24–182 g/ha N,N-Dimethylpiperidiniumchlorid an Tomaten bei einer Wuchshöhe von 50–65 cm zu Beginn der Blüte führten ebenfalls zu einer Erhöhung der Fruchtproduktion. Bei unbeeinflußter Wuchshöhe kann eine Verbesserung des Verhältnisses vegetativer (z. B. Blätter) zu generativer Pflanzenmasse (Tomaten) angenommen werden.

## Beispiel 9

Pflanzung: 28. 08. 78
Behandlung: 26. 10. 78 (ca. 50–65 cm Wuchshöhe, 10 % Blüten)
Ernte 08. 12. 78

Lycopersion esculentum, var. Flora-date

| | | g/ha N,N-Dimethylpiperidiniumchlorid | | | |
|---|---|---|---|---|---|
| | | 0 | 24 | 48 | 192 |
| Wuchshöhe | cm | 81,8 | 82,4 | 78,0 | 80,8 |
| Ertrag grüne Früchte | to/ha | 23,8 | 26,6 | 26,2 | 26,7 |
| Ertrag Marktware | to/ha | 26,2 | 27,7 | 29,3 | 29,1 |

## Beispiel 10

Tomaten wurden bei einer Wuchshöhe von 50–60 cm zu Beginn der Blüte mit 112–448 g/ha bzw. mit einer Doppelbehandlung von zweimal 112 g/ha N,N-Dimethylpiperidiniumchlorid behandelt. Insbesondere bei den Behandlungen mit 112 bzw. 112 + 112 g/ha Wirkstoff konnte eine Reifeverfrühung und Ertragserhöhung festgestellt werden. Das Einzelfruchtgewicht wurde ebenfalls erhöht.

## Beispiel 10

Pflanzung: 25. 05. 78
Behandlung: 06. 07. 78 (ca. 50–65 cm Wuchshöhe, 10 % Blüten)
Ernte 28. 08. + 20. 09. 78

Lycopersicon esculentum, var. C-37

| | | g/ha N,N-Dimethylpiperidiniumchlorid | | | | |
|---|---|---|---|---|---|---|
| | | 0 | 112 | 224 | 448 | 112 + 112 |
| Ertrag reife Früchte 1. Ernte | to/ha | 23,6 | 30,8 | 22,4 | 29,1 | 34,9 |
| Ertrag reife Früchte gesamt | to/ha | 60,8 | 69,6 | 61,2 | 63,1 | 75,1 |
| 100-Fruchtgewicht | kg | 7,9 | 8,5 | 8,0 | 8,1 | 8,5 |

100-Fruchtgewicht = Gewicht von 100 Tomaten.

## Beispiel 11

Behandlungen mit 112—224 g/ha bzw. zweimal 224 g/ha N,N-Dimethylpiperidiniumchlorid bei einer Wuchshöhe von 30—40 cm zur Voll- bzw. am Ende der Blühperiode führten bei Tomaten zu einer Ernteverfrühung und Ertragserhöhung.

## Beispiel 11

Pflanzung: 02. 05. 78
Behandlung: 06. 07. 78 (ca. 30—40 cm Wuchshöhe, 65 % Blüten)
21. 07. 78 (Ende der Blüte)
Ernte 01. + 15. 09. 78

Lycopersicon esculentum, var. C-37

|  |  | g/ha N,N-Dimethylpiperidiniumchlorid | | | |
|  |  | 0 | 112 | 224 | 224 + 224 |
| --- | --- | --- | --- | --- | --- |
| Ertrag reife Früchte 1. Ernte | to/ha | 28,6 | 29,9 | 31,5 | 34,1 |
| Ertrag reife Früchte 2. Ernte | to/ha | 31,7 | 33,4 | 33,4 | 32,3 |
| Ertrag reife Früchte gesamt | to/ha | 60,3 | 63,3 | 64,9 | 66,4 |

## Beispiel 12

Tomaten wurden während der Vollblüte mit 56—896 g/ha N,N-Dimethylpiperidiniumchlorid behandelt. Die Aufwandmengen von 56 und 112 g/ha Wirkstoff führten wiederum zu Mehrerträgen. Die hohe Aufwandmenge von 896 g/ha Wirkstoff bewirkte eine Ertragsminderung.

## Beispiel 12

Pflanzung: 23. 05. 78
Behandlung: 19. 07. 78 (60 % Blüten)
Ernte 27. 10. 78

Lycopersicon esculentum, var. C-38

|  |  | g/ha N,N-Dimethylpiperidiniumchlorid | | | | |
|  |  | 0 | 56 | 112 | 224 | 896 |
| --- | --- | --- | --- | --- | --- | --- |
| Einzelgewicht | g | 212 | 225 | 214 | 197 | 197 |
| Ertrag Marktware | to/ha | 35,9 | 36,3 | 38,3 | 35,2 | 34,1 |
| Ertrag gesamt (Marktware + grüne Früchte) | to/ha | 40,6 | 42,0 | 43,7 | 40,9 | 39,5 |

## Beispiel 13

75 g/ha N,N-Dimethylpiperidiniumchlorid, angewandt während der Vollblüte bei Tomaten, führten zu einem Mehrertrag.

## Beispiel 13

| Pflanzung: | 09. 05. 79 |
| Behandlung: | 25. 05. 79 (Vollblüte) |
| Ernte | 02. 07. – 27. 08. 79 |

Lycopersicon esculentum, var. »Sonato«

| | | g/ha N,N-Dimethylpiperidiniumchlorid | |
| | | 0 | 75 |
| --- | --- | --- | --- |
| Ertrag | t/ha | 83,0 | 85,2 |

## Beispiel 14

Werden Tomaten jeweils zu Beginn und zur Vollblüte mit Aufwandmengen von 25–100 g/ha N,N-Dimethylpiperidiniumchlorid behandelt, so werden auch hier hohe Mehrerträge beobachtet. Die Tatsache, daß ein Einfluß auf die Blütenbildung nicht beobachtet werden kann, läßt einen erhöhten Befruchtungseffekt vermuten.

## Beispiel 14

| Pflanzung: | 04. 04. 79 |
| Behandlung: | 19. 04. – 16. 05. 79 (erste Blüte sichtbar bzw. Vollblüte) |
| Zählung der Blüten: | 20. 04. – 27. 08. 79 |
| Ernte | 27. 08. 79 |

Lycopersicon esculentum, var. »Houryu«

| | | g/ha N,N-Dimethylpiperidiniumchlorid | | | | |
| | | 0 | 25 + 25 | 50 + 50 | 75 + 75 | 100 + 100 |
| --- | --- | --- | --- | --- | --- | --- |
| Ertrag | t/ha | 65,2 | 73,4 | 78,0 | 77,2 | 68,6 |
| Blüten | Stck/Pflanze | 48,5 | 49,5 | 48,5 | 44,5 | 45,5 |

## III. Samen- und Hülsenfrüchte, z. B. Bohnen

## Beispiel 15

Pferdebohnen wurden mit 70 g/ha N,N-Dimethylpiperidiniumchlorid zum Zeitpunkt der Verzweigung behandelt. Eine Erhöhung der Stengel- und Blütenmasse ist zu beobachten. Auch kann eine Erhöhung der Pflanzentrockenmasseproduktion festgestellt werden. Die Produktion von Früchten wurde ebenfalls erhöht. Eine Steigerung des Proteinertrages je Flächeneinheit kann angenommen werden.

## Beispiel 15

Saat:         21. 04. 79
Behandlung:   17. 05. 79 (Mitte der Verzweigung)
Auswertung:   06. 06. 79

Vicia faba, var. »96 Broad improved long pod«

|  |  | g/ha N,N-Dimethylpiperidinium-chlorid | |
|---|---|---|---|
|  |  | 0 | 70 |
| Stengel | Stck/Pflanze | 4,2 | 5,3 |
| Blüten | Stck/Pflanze | 7,4 | 11,2 |
| Gewicht/Pflanze | g TM | 201,0 | 216,4 |
| Ertrag Früchte | g/Pflanze | 67,4 | 75,7 |
| Gewicht/Frucht (Hülse) | g | 11,0 | 10,7 |

## Beispiel 16

Bohnen wurden zu Beginn der Blüte mit 112 g/ha N,N-Dimethylpiperidiniumchlorid behandelt. Im Gegensatz zu den hohen Aufwandmengen konnte mit 112 g/ha Wirkstoff der Fruchtansatz sowie der Gesamtertrag erhöht werden.

## Beispiel 16

Saat:         24. 07. 78
Behandlung:   15. 09. 78 (Beginn Blüte)
Ernte:        08. 11. 78

Phaseolus Limensis, var. Kingston Bush
Baby lima beans

|  |  | g/ha N,N-Dimethylpiperidiniumchlorid | |
|---|---|---|---|
|  |  | 0 | 112 |
| Hülsen/Pflanze | Stck | 15,3 | 18,0 |
| Ertrag Bohnen/Pflanze | g | 10,5 | 12,4 |

## Beispiel 17

Weiße Bohnen zum Ende der Blüte behandelt, reagieren mit einem verbesserten Fruchtansatz und Gesamtertrag ebenfalls am besten auf die Behandlung mit 112 g/ha N,N-Dimethylpiperidiniumchlorid.

### Beispiel 17

Saat: 15. 06. 78
Behandlung: 03. 08. 78 (ca. 35 cm Wuchshöhe, 50% Hülsen, 10% Blüten)
Ernte 11. 10. 78

Phaseolus, var. SW 59
Small white beans

| | | g/ha N,N-Dimethylpiperidiniumchlorid | | |
|---|---|---|---|---|
| | | 0 | 112 | 560 |
| Hülsen/Pflanze | Stck | 13,0 | 14,8 | 8,3 |
| Ertrag Bohnen | kg/ha | 1928 | 2093 | 1745 |

### IV. Blattgemüse, z. B. Salat, Kohlrabi

### Beispiel 18

Kopfsalat reagiert auf eine Behandlung im 6—8 Blattstadium mit 25—100 g/ha N,N-Dimethylpiperidiniumchlorid mit erhöhter Biomasseproduktion.

### Beispiel 18

Pflanzung: 26. 06. 79
Behandlung: 04. 07. 79
Ernte 09. 08. 79

Lactuca sativa, var. »Corelli«

| | | g/ha N,N-Dimethylpiperidiniumchlorid | | | |
|---|---|---|---|---|---|
| | | 0 | 25 | 75 | 100 |
| Gewicht/Kopf | g | 316 | 344 | 340 | 344 |
| Ertrag | dt/ha | 421 | 458 | 454 | 458 |

dt = Dezitonne

### Beispiel 19

Kohlrabi zum 8—10 Blattstadium mit 25—75 g/ha N,N-Dimethylpiperidiniumchlorid behandelt, bringt einen größeren Anteil gesunder Knollen sowie einen Mehrertrag.

### Beispiel 19

Pflanzung: 24. 08. 79
Behandlung: 04. 09. 79 (8 — 10 Blattstadium)
Ernte + Auswertung: 04. 10. 79

Brassica oleracea gongylodes, var. Tero

| | | g/ha N,N-Dimethylpiperidiniumchlorid | | |
|---|---|---|---|---|
| | | 0 | 25 | 75 |
| Gesunde Kohlrabi | % | 70,0 | 76,0 | 72,0 |
| Kranke Kohlrabi | % | 30,0 | 24,0 | 28,0 |
| Ertrag Kohlrabi | dt/ha | 529,3 | 553,8 | 550,6 |

## V. Ölpflanzen, z. B. Sojabohnen

### Beispiel 20

Soja, zum 4-Blattstadium mit 112—448 g/ha bzw. zum 4-Blattstadium und 10-Blattstadium mit jeweils 112 g/ha N,N-Dimethylpiperidiniumchlorid behandelt, reagierte über einen besseren Fruchtansatz mit Mehrerträgen.

### Beispiel 20

| Saat: | 29. 05. 78 |
| Behandlung: | 09. 07. 78 (ca. 16 cm Wuchshöhe, 4-Blattstadium) |
| | 24. 07. 78 (ca. 36 cm Wuchshöhe, 10-Blattstadium Blüte) |
| Ernte: | 19. 10. 78 |

| | g/ha N,N-Dimethylpiperidiniumchlorid | | | |
| | 0 | 112 | 448 | 112 + 112 |
|---|---|---|---|---|
| Ertrag Bohnen, kg/ha | 3053 | 3344 | 3664 | 3475 |

## VI. Gurkengewächse, z. B. Melonen

### Beispiel 21

Wassermelonen wurden zu Beginn der Blüte mit 25 g/ha bzw. zu Beginn und Vollblüte mit je 12,5 g/ha N,N-Dimethylpiperidiniumchlorid behandelt. Der erhöhte Fruchtansatz läßt auf eine Geschlechtsdifferenzierung schließen. Hohe Mehrerträge sind die Folge.

### Beispiel 21

| Pflanzung: | 28. 05. 79 |
| Behandlung: | 26. 06. 79 (Beginn der Blüte/Vollblüte) |
| Ernte: | 08. 08. 79 |

Citrullus lanatus, var. »Clondyke«

| | | g/ha N,N-Dimethylpiperidiniumchlorid | | |
| | | 0 | 25 | 12,5 + 12,5 |
|---|---|---|---|---|
| Früchte | Stck/Pflanze | 6,0 | 10,0 | 9,0 |
| Fruchtgewicht | kg/Stck | 1,28 | 1,13 | 1,20 |
| Ertrag | t/ha | 47,9 | 70,9 | 74,8 |

### Beispiel 22

Werden Wassermelonen erst während der Blühperiode behandelt, verringert sich der Einfluß auf die Geschlechtsdifferenzierung. Behandlungen mit 12,5 bis zu zweimal 50 g/ha N,N-Dimethylpiperidiniumchlorid führten über eine Erhöhung des Einzelfruchtgewichtes zu Mehrerträgen.

## Beispiel 22

Pflanzung:        18. 04. 79
Behandlung:       01. 06. 79 (20 – 25% Blüten)
                  08. 06. 79 (60 – 70% Blüten)
Ernte:            10. – 17. 07. 79

Citrullus lanatus, var. »Sugarbaby«

|  |  | g/ha N,N-Dimethylpiperidiniumchlorid | | | |
|---|---|---|---|---|---|
|  |  | 0 | 12,5 | 50 | 50 + 50 |
| Früchte: 1. Ernte | Stck/100 m$^2$ | 8,0 | 8,0 | 8,0 | 8,2 |
| Fruchtgewicht: | kg/Stck | 2,36 | 2,40 | 2,64 | 2,74 |
| Ertrag: | kg/ha | 1890 | 1920 | 2110 | 2260 |
| Früchte: 1–2. Ernte | Stck/100 m$^2$ | 10,0 | 9,7 | 9,8 | 10,2 |
| Fruchtgewicht: | kg/Stck | 2,36 | 2,65 | 2,66 | 2,64 |
| Ertrag: | kg/ha | 2359 | 2573 | 2610 | 2690 |

## Beispiel 23

Auch bei Cantaloupes kommt es durch eine Behandlung zu Beginn der Blüte mit 50 bis zu zweimal 50 g/ha N,N-Dimethylpiperidiniumchlorid zur Ernteverfrühung und Mehrerträgen.

## Beispiel 23

Pflanzung:        11. 05. 78
Behandlung:       30. 06. 78 (ca. 60 cm Rankenlänge, erste Blüte)
                  13. 07. 78 (14 Tage später, Vollblüte)
Ernte:            02. 08. 78
                  14. 08. 78

Cucumis melo

|  |  | g/ha N,N-Dimethylpiperidiniumchlorid | | |
|---|---|---|---|---|
|  |  | 0 | 50 | 50 + 50 |
| Wuchshöhe | cm | 48,7 | 49,2 | 51,7 |
| Ertrag reife Früchte 1. Ernte | t/ha | 22,3 | 23,0 | 33,0 |
| Ertrag reife Früchte 2. Ernte | t/ha | 14,7 | 8,3 | 14,0 |
| Ertrag unreife Früchte 2. Ernte | t/ha | 14,3 | 20,3 | 19,0 |
| Ertrag reife + unreife Früchte 1. + 2. Ernte | t/ha | 51,3 | 51,6 | 66,0 |

### VII. Citrusfrüchte, z. B. Orangen

## Beispiel 24

Werden Orangenbäume zum Zeitpunkt der Vollblüte mit 50 – 1000 ppm N,N-Dimethylpiperidiniumchlorid behandelt, so erhöht sich die Konzentration der Zellinhaltsstoffe an z. B. Ca-Ionen in der Schale, dem Fruchtfleisch und dem Fruchtsaft.

## Beispiel 24

| Pflanzung: | ca. 1954 |
|---|---|
| Behandlung: | 26. 04. 1979 (Vollblüte) |
| Ernte: | 07. 11. 1979 |
| Analyse: | 14. 11. 1979 |

Citrus sinensis, var. Navel

| | | ppm N,N-Dimethylpiperidiniumchlorid | | | |
|---|---|---|---|---|---|
| | | 0 | 50 | 100 | 1000*) |
| Ca-Gehalt Schale | ppm | 10 500 | 12 000 | 7750 | 12 250 |
| | % | 100 | 114 | 74 | 117 |
| Ca-Gehalt Fleisch | ppm | 3000 | 4250 | 5000 | 5000 |
| | % | 100 | 142 | 167 | 167 |
| Ca-Gehalt Saft | ppm | 550 | 8750 | 5750 | 7500 |
| | % | 100 | 159 | 104 | 136 |

*) Entspricht 20, 40, 400 g Wirkstoff je ha gelöst in 4,0 l Wasser je Baum bei 100 Bäumen/ha.

## Beispiel 25

Es wurden Früchte von z. B. mit 1000 ppm N,N-Dimethylpiperidiniumchlorid zur Vollblüte behandelten Orangenbäumen 3 Stunden lang Temperaturen von −12°C ausgesetzt. 15 1/2 Stunden später durchgeführte elektrische Widerstandsmessungen ergaben eine geringere Leitfähigkeit in den behandelten Früchten. Geringere Leitfähigkeit steht in direkter Beziehung zu weniger freien Elektrolyten aus durch Kälte geschädigten Zellen und damit zu geringeren Kälteschäden. Es ist bekannt, daß Ca-Ionen eine wesentliche Funktion bei der Zellwandbildung spielen.

N,N-Dimethylpiperidiniumchlorid erhöht den Gehalt an Ca-Ionen im Pflanzengewebe und somit die Kälteresistenz.

Durch Veränderung der Zellinhaltsstoffe, z. B. Erhöhung der Ionenkonzentration, wird die Resistenz gegenüber Umwelteinflüssen erhöht.

## Beispiel 25

| Pflanzung: | ca. 1954 |
|---|---|
| Behandlung: | 26. 04. 1979 (Vollblüte) |
| Ernte: | 08. 12. 1979 |
| Einlagerung bei −12°C: | 08. 12. 79 14.30 Uhr |
| Auslagerung: | 08. 12. 79 17.30 Uhr |
| Messung des Widerstandes: | 09. 12. 79 9.00 Uhr |

Citrus sinensis, var. Navel

| Sorte | ppm N,N-Dimethylpiperidiniumchlorid | |
|---|---|---|
| | 0 | 1000*) |
| Navel Elektr. Widerstand Kilo-Ohm | 17,5 | 19,4 |
| Valencia Elektr. Widerstand Kilo-Ohm | 19,6 | 24,4 |

*) Entspricht 400 g/ha Wirkstoff.

## Beispiel 26

1000 ppm N,N-Dimethylpiperidiniumchlorid zur Vollblüte auf Orangenbäumen aufgesprüht, erhöhen das Einzelgewicht und den Fruchtertrag.

## Beispiel 26

Pflanzung: ca. 1954
Behandlung: 26. 04. 1979 (Vollblüte)
Ernte: 07. 12. 1979
Wägung: 18. 01. 1979

Citrus sinensis, var. Navel

| N = 60 Früchte | | ppm N,N-Dimethylpiperidiniumchlorid | |
| --- | --- | --- | --- |
| | | 0 | 1000*) |
| Fruchtgewicht | kg | 12,85 | 15,05 |
| Einzelfruchtgew. | g | 214 | 251 |
| | % | 100 | 117 |

*) Entspricht 400 g/ha Wirkstoff.

## Beispiel 27

1000 ppm N,N-Dimethylpiperidiniumchlorid zur Vollblüte auf Orangenbäume aufgesprüht, erhöhen die Fruchtgröße durch einen größeren Fruchtdurchmesser und eine längere Fruchtachse. Größere Orangenfrüchte bedeuten eine höhere Fruchtqualität (äußere Fruchtqualität).

## Beispiel 27

Pflanzung: ca. 1954
Behandelt: 26. 04. 1979 (Vollblüte)
Ernte: 07. 12. 1979
Messung: 18. 01. 1979

Citrus sinensis, var. Navel

| N = 4 Früchte | | ppm N,N-Dimethylpiperidiniumchlorid | |
| --- | --- | --- | --- |
| | | 0 | 1000*) |
| Fruchtdurchmesser | mm | 49,8 | 56,1 |
| | % | 100 | 113 |
| Fruchtlängsachse | mm | 53,2 | 57,5 |
| | % | 100 | 108 |

*) Entspricht 400 g/ha Wirkstoff.

## Beispiel 28

1000 ppm N,N-Dimethylpiperidiniumchlorid zur Vollblüte auf Orangenbäume aufgesprüht, erhöhen den Fruchtsaftertrag und die Fruchtsaftausbeute. Darüber hinaus wird die innere Fruchtqualität verbessert. Diese ist charakterisiert durch einen erheblich höheren Vitamin C-Gehalt und einen deutlich geringeren Säuregehalt.

Beispiel 28

Pflanzung: ca. 1954
Behandlung: 26. 04. 1979 (Vollblüte)
Ernte: 07. 12. 1979
Analyse: 24. 01. 1980

Citrus sinensis, var. Navel

| N = 13 Früchte | | | ppm N,N-Dimethylpiperidiniumchlorid | |
|---|---|---|---|---|
| | | | 0 | 1000*) |
| Einzelfruchtgewicht | g | | 211,8 | 237,5 |
| | % | | 100 | 112 |
| Saftertrag/Frucht | cc | | 96,0 | 115,3 |
| | % | | 100 | 120 |
| Saftausbeute | % | | 45,3 | 48,5 |
| Vitamin C-Gehalt mg/100 g frisch | | | 65,1 | 73,9 |
| | % | | 100 | 113,5 |
| Säuregehalt im Saft mval/100 cc | | | 19,2 | 15,1 |
| | % | | 100 | 78,6 |

*) Entspricht 400 g Wirkstoff je ha.

Die Salze können auch zusammen mit anderen Pflanzenschutzmitteln, d. h. zusammen mit Herbiziden, Insektiziden, Synergisten, Antidoten, anderen Wachstumsregulatoren, insbesondere aber auch mit Fungiziden angewendet werden. Vorteilhaft für die Praxis ist auch die Anwendung der Salze zusammen mit Düngemitteln, insbesondere die Vermischung mit Harnstoffen.

Die Wirksamkeit der Salze geht auf das Kation zurück, so daß die Wahl des Anions beliebig ist. Anionen phytotoxischer Säuren sollen jedoch nicht verwendet werden. Geeignete Säuren sind beispielsweise Salzsäure, Bromwasserstoffsäure, Schwefelsäure, Kohlensäure, Salpetersäure, Phosphorsäure, Essigsäure, Propionsäure, Benzoesäure, Schwefelsäuremonomethyl- oder -ethylester, 2-Ethylhexansäure, Acrylsäure, Malein-, Bernstein, Adipinsäure, Ameisensäure, Chloressigsäure, p-Toluolsulfonsäure, Benzolsulfonsäure, Dodecylbenzolsulfonsäure. Das Salz wird bevorzugt.

Die Salze können in einer Gabe oder aufgeteilt in mehrere Teilgaben (d. h. zu verschiedenen Zeitpunkten) ausgebracht werden.

Die Salze können als Lösungen, Dispersionen, Emulsionen, Suspensionen, Granulate, Schäume oder Stäubemittel angewendet werden. Die Anwendungsformen richten sich ganz nach den Verwendungszwecken; sie sollen in jedem Fall eine feine Verteilung der wirksamen Substanz gewährleisten. Die Anwendung kann über das Saatkorn oder über die grünen Pflanzenteile erfolgen.

Zur Herstellung von direkt versprühbaren Lösungen kommt die Lösung in Wasser in Betracht. Es können aber auch Dispersionen in Kohlenwasserstoffen mit Siedepunkten höher als 150°C und einer oder mehrerer funktionellen Gruppen, z. B. der Ketogruppe, der Äthergruppe, der Estergruppe oder der Amidgruppe, wobei diese Gruppe als Substituent an einer Kohlenwasserstoffkette stehen oder Bestandteil eines heterocyclischen Ringes sein kann, als Spritzflüssigkeit verwendet werden.

Wäßrige Anwendungsformen können auch aus Emulsionskonzentraten, Pasten oder netzbaren (Spritzpulvern) durch Zusatz von Wasser bereitet werden. Zur Herstellung von Emulsionen können die Substanzen als solche oder in einem Lösungsmittel gelöst, mittels Netz- oder Dispergiermitteln, z. B. Polyethylenoxidadditionsprodukten in Wasser oder organischen Lösungsmitteln homogenisiert werden. Es können aber auch aus wirksamer Substanz, Emulgier- oder Dispergiermittel und eventl. Lösungsmittel bestehende Konzentrate hergestellt werden, die zur Verdünnung mit Wasser geeignet sind.

Stäubemittel können durch Mischen oder gemeinsames Vermahlen der wirksamen Substanzen mit einem festen Trägerstoff, z. B. Kieselgur, Talkum, Ton oder Düngemittel hergestellt werden. Bei den Granulaten werden Mischungen mit Düngemitteln bevorzugt.

# 0 036 489

**Patentansprüche**

1. Verfahren zur Regulierung des Wachstums von Pflanzen außer Baumwollpflanzen oder Getreidepflanzen, dadurch gekennzeichnet, daß man die Pflanzen mit einem N,N-Dimethylpiperidiniumsalz in einer Menge von weniger als 500 g Wirkstoff je ha behandelt.

2. Verfahren gemäß Anspruch 1, dadurch gekennzeichnet, daß man die Pflanzen mit N,N-Dimethylpiperidiniumchlorid in einer Menge von 10 bis 450 g Wirkstoff je ha behandelt.

3. Verfahren gemäß Anspruch 1, dadurch gekennzeichnet, daß man die Pflanzen von Knollenfrüchten, Fruchtgemüse, Samenfrüchten, Hülsenfrüchten, Blattgemüse, Ölpflanzen, Gurkengewächse oder Citrusfrüchten behandelt.

**Claims**

1. A process for regulating the growth of plants, with the exception of cotton plants and cereals, wherein the plants are treated with an N,N-dimethylpiperidinium salt in an amount of less than 500 g of active ingredient per hectare.

2. A process as claimed in claim 1, wherein the plants are treated with N,N-dimethylpiperidinum chloride in amount of from 10 to 450 g of active ingredient per hectare.

3. A process as claimed in claim 1, wherein the plants of tubers, fruit vegetables, seed fruits, legumes, leaf vegetables, oil plants, cururbits and citruses are treated.

**Revendications**

1. Procédé de régularisation de la croissance des plantes, en dehors du coton des céréales, caractérisé par le fait qu'on traite les plantes avec un sel de N,N-diméthylpipéridinium, à raison de moins de 500 g de principe actif par hectare.

2. Procédé selon la revendication 1, caractérisé par le fait qu'on traite les plantes avec du chlorure de N,N-diméthylpipéridinium, à raison de 10 à 450 g principe actif par hectare.

3. Procédé selon la revendication 1, caractérisé par le fait qu'on traite des plantes de fruits à bulbe, légumesfruits, fruits à graines légumineuses, légumes verts, plantes oléagineuses, concombres, ou agrumes.